# EUROPÄISCHE PATENTSCHRIFT

(11) **EP 2 125 326 B1**
(45) Veröffentlichungstag und Bekanntmachung des Hinweises auf die Patenterteilung: **19.06.2013**
(21) Anmeldenummer: 07856389.7
(22) Anmeldetag: 05.12.2007
(51) Int. Cl.: B29C 45/66, B29C 45/76

(54) **VERFAHREN ZUM BETREIBEN EINER SPRITZGIESSMASCHINE MIT ZWEI KNIEHEBELMECHANISMEN SOWIE ZUGEHÖRIGE SPRITZGIESSMASCHINE**
METHOD FOR OPERATING AN INJECTION MOLDING MACHINE HAVING TWO TOGGLE LEVER MECHANISMS AND ASSOCIATED INJECTION MOLDING MACHINE
PROCÉDÉ D'EXPLOITATION D'UNE PRESSE D'INJECTION DOTÉE DE DEUX MÉCANISMES À GENOUILLÈRE, ET PRESSE D'INJECTION ASSOCIÉE

(30) Priorität: 21.12.2006 DE 102006061969
(43) Veröffentlichungstag der Anmeldung: 02.12.2009
(73) Patentinhaber: Keinath, Renate, 72336 Balingen (DE)
(72) Erfinder: Keinath, Renate, 72336 Balingen (DE)
(74) Vertreter: Reinhardt, Harry
(86) Internationale Anmeldenummer: PCT/EP2007/010569
(87) Internationale Veröffentlichungsnummer: WO 2008/080496

(56) Entgegenhaltungen:
- EP-A- 0 383 935
- EP-A- 1 559 526
- DE-A1- 4 037 281
- DE-A1-102004 046 493

## Beschreibung

Die Erfindung betrifft ein Verfahren zum Betreiben einer Spritzgießmaschine zur Verarbeitung von Kunststoffen und anderer plastifizierbarer Massen wie pulverige, metallische oder keramische Massen mit wenigstens zwei Kniehebelmechanismen zum Schließen und Öffnen der Spritzgießform nach dem Oberbegriff des Anspruches 1 sowie eine derartige Spritzgießmaschine nach dem Oberbegriff des Anspruches 5. -

Aus der dem Oberbegriff der unabhängigen Ansprüche 1 und 8 zugrunde liegenden DE 10 2004 046 493 A1 ist eine über zwei Kniehebel hydraulisch betriebene Presse zur Herstellung von Formteilen aus Kunststoff bekannt. Jedem Kniehebelsystem ist eine eigenes Antriebselement zugeordnet, um eine geregelte Weg- und Kraftverstellung des Pressenstößels vorzunehmen. Dazu erfassen Wegaufnehmer eine Abweichung der Parallelität. Kurz vor Strecklage wird das Übersetzungsverhältnis des Kniehebels genutzt, um trotz der Wegmessung eine hohe Empfindlichkeit zu erreichen.

Aus der EP 0 383 935 A1 ist eine Formschließeinheit für eine Spritzgießmaschine bekannt, an der zwei symmetrisch zur Schließachse angeordnete Kniehebelmechanismen durch zwei gesonderte, mittels einer Regeleinheit geregelte Servomotoren angetrieben sind. Die Rotationsgeschwindigkeit oder alternativ die Rotationsstellung der Servomotoren wird zur Erzielung einer Plattenparallelität erfasst und gesteuert.

Aus der DE 199 23 849 C2 ist eine Formschließeinheit für eine Spritzgießmaschine bekannt, an der über eine Schubkurbel ein doppelter Kniehebelmechanismus angetrieben wird. Die Kniehebelmechanismen sind symmetrisch zur Schließachse angeordnet, jedoch ist für beide ein gemeinsamer Antrieb vorgesehen. (Vergleiche auch DE-U 94 03 353 oder DE 101 22 599 A1)

Symmetrische Anordnungen von Kniehebeln sind ebenfalls aus der EP 0 620 095 B1, insbesondere Figuren 17 und 18 bekannt, wobei dort der Kniehebel als sogenannter "Y-Kniehebel" quer zur Schließachse wirkt. Dazu ist an den Anlenkungspunkten der Kniehebel mittels Halteelementen ein Verbindungselement befestigt, an dem die Antriebseinheit angeordnet ist, die durch einen Hohlwellenmotor gebildet ist. Auch dort greift eine Antriebseinheit an zwei symmetrisch zur Schließachse angeordneten Kniehebeln an. -

Aus der DE 40 37 281 A1 ist eine hydraulische Presse mit Vierpunktantrieb über Kniehebel bekannt. Über zwei Druckregelventile wird bei Anlage der Pressplatten der Druck in je zwei diagonal angeordnete Gleichlaufzylinderräumen über den durch Feinmesssysteme erfassten Weg zur Erzielung einer Plattenparallelität geregelt.

Y-Kniehebel sind an sich auch aus der DE-B 1 116 386, DE 42 30 348 A1 oder US-A 3,577,596 bekannt, wobei in allen Fällen lediglich eine Antriebseinheit vorgesehen ist.

Ausgehend vom diesem Stand der Technik liegt der Erfindung die Aufgabe zugrunde, ein Verfahren zum Betrieb einer Spritzgießmaschine sowie eine Spritzgießmaschine zur Verfügung zu stellen, die auch bei Verwendung von Kniehebeln den an die Präzision der Spritzteile zu stellenden Anforderungen genügen.

Diese Aufgabe wird durch ein Verfahren zum Betrieb einer Spritzgießmaschine mit den Merkmalen des Anspruches 1 sowie durch eine Spritzgießmaschine mit den Merkmalen des Anspruches 5 gelöst.

Die Kniehebelmechanismen werden durch gesonderte Antriebseinheiten angetrieben und dienen zum Schließen und Öffnen der Spritzgießform als auch zum Aufbringen der Schließkraft. Damit können die Kniehebelmechanismen jeweils für sich angesteuert werden, wodurch eine synchrone Bewegung und vor allem auch Plattenparallelität im Hinblick auf beweglichen und stationären Formträger bzw. die daran befestigten Teile einer Spritzgießform erzielt werden kann. Diese Plattenparallelität ist bei Kniehebelmechanismen nach dem Stand der Technik meist deshalb nicht gewährleistet, weil die Krafteintragung zwar symmetrisch erfolgt, der Kniehebelmechanismus jedoch über so viele miteinander bewegliche Teile verfügt, dass allenfalls in Strecklage sich durch die in Anlage kommenden Teile der Spritzgießform eine scheinbare Parallelität einstellt. Wird diese tatsächliche Lage jedoch insbesondere verfahrensgemäß bereits während der Schließbewegung erfasst, können daraus Regelgrößen für die Antriebseinheiten abgeleitet werden, die zu einer Parallelität wenigstens beim Formschluss beitragen, was die Qualität der Spritzgießteile erhöht. Kurz vor und beim Formschluss werden ergänzend Leistung oder Kraft der Antriebseinheiten erfasst und geregelt. Auch während der gesamten Schließbewegung ist eine Erfassung möglich, was sich insbesondere in einer erhöhten Lebenserwartung von Spritzgießform und Führungen widerspiegelt.

Vorzugsweise sind die Kniehebelmechanismen Y-Kniehebel, die den Vorteil haben, dass sie bei entsprechender Anordnung den Raum zwischen sich freigeben. Damit ist ein Platz sparender Aufbau vor allem bei einer Zwei-Plattenmaschine möglich, bei der die Formschließeinheit auf derselben Seite wie die Spritzgießeinheit angeordnet werden kann. Zwischen den Kniehebeln der Formschließeinheit kann dann nämlich die Plastifiziereinheit eingesetzt werden, sodass sich ein sehr kompakter Aufbau mit einer durch die Kniehebelübertragung günstigen Kraftübertragung ergibt.

Weitere Vorteile ergeben sich aus den Unteransprüchen und der nachfolgenden Beschreibung.

Im Folgenden wird die Erfindung anhand mehrerer in den Figuren dargestellten Ausführungsbeispielen näher erläutert. Es zeigen:
- Fig. 1: eine dreidimensionale Ansicht einer Spritzgießmaschine bei geöffneter Spritzgießform,
- Fig. 2: eine Ansicht der Spritzgießmaschine gemäß Fig. 1 bei geschlossener Spritzgießform und von der gegenüberliegenden linken Seite,
- Fig. 3: eine Seitenansicht der Spritzgießmaschine bei geöffneter Spritzgießform,
- Fig. 4: eine stirnseitige Ansicht der Spritzgießmaschine mit Blick auf die Spritzgießeinheit, d.h. in Fig. 1 von rechts,
- Fig. 4a: einen vergrößerten Schnitt im Bereich der Führung,
- Fig. 5: einen Schnitt nach Linie 5-5 von Fig. 3,
- Fig. 6: eine dreidimensionale Ansicht einer Spritzgießmaschine in einer weiteren Ausführungsform bei geschlossener Spritzgießform,
- Fig. 7: eine stimseitige Ansicht der Spritzgießmaschine gemäß Fig. 6 von rechts,
- Fig. 8, 9: eine Spritzgießmaschine in einer weiteren Ausführungsform in dreidimensionaler Ansicht unter Anordnung der Formschließeinheit auf der Seite des beweglichen-Formträgers mit geschlossener und geöffneter Spritzgießform,
- Fig. 10: eine schematische Ansicht der Spritzgießmaschine mit zugehöriger Regeleinrichtung.

Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

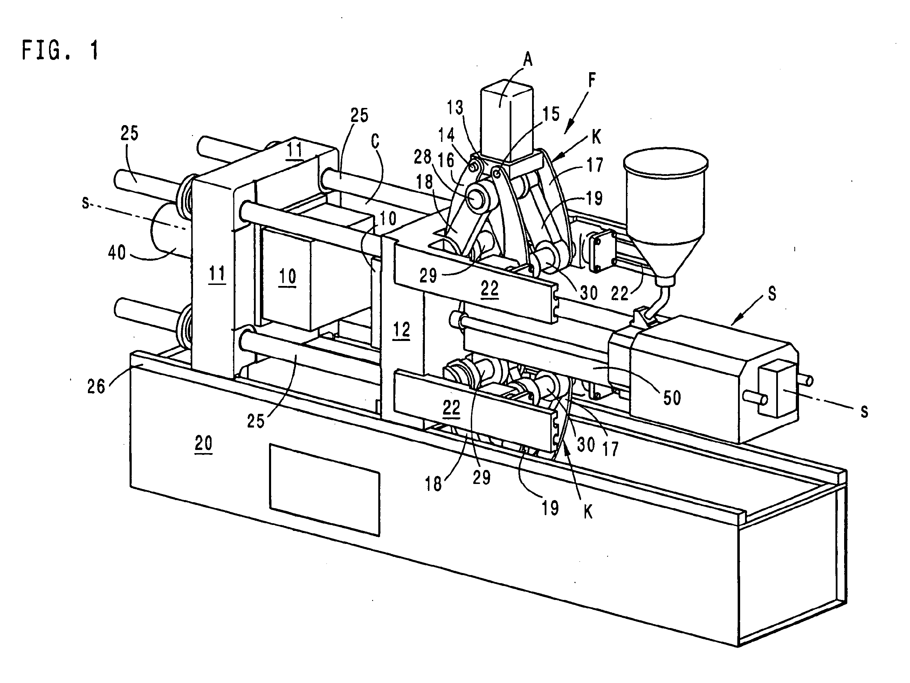

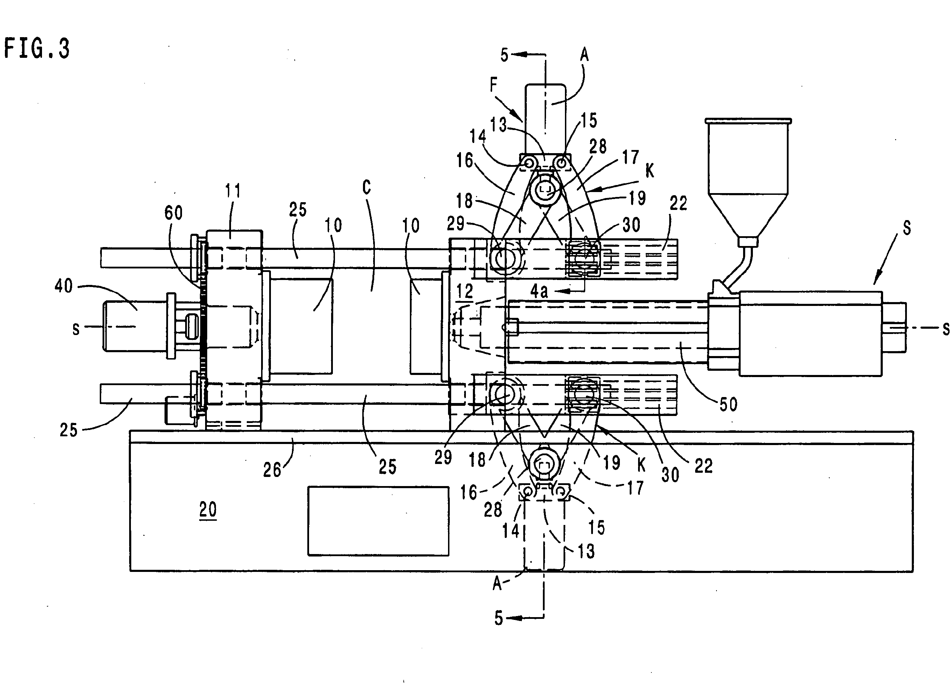

Die Figuren zeigen eine Spritzgießmaschine zur Verarbeitung von Kunststoffen und anderer plastifizierbarer Massen wie pulverige, metallische oder keramische Massen, die wie bei einer Spritzgießmaschine üblich eine Formschließeinheit F und eine Spritzgießeinheit S aufweist. Zwischen Formträgern, nämlich einem stationären Formträger 12 und einem beweglichen Formträger 11, ist wenigstens eine Spritzgießform 10 bestehend aus mehreren Teilen aufgenommen. Wenigstens zwei Kniehebelmechanismen K sind zur Schließbewegung der Formträger aufeinander zu und voneinander weg zum Öffnen der Spritzgießform 10 vorgesehen, d.h. sie sind zum Schließen und Öffnen der Spritzgießform als auch zum Aufbringen der Schließkraft vorgesehen. Die Kniehebelmechanismen sind in Figur 1 oberhalb und untefialb des Plastifizierzylinders 50 der Spritzgießeinheit S angeordnet. Die Kniehebelmechanismen sind symmetrisch zu einer Schließachse s-s der Formschleißeinheit F angeordnet. Wie insbesondere aus Fig. 3 ersichtlich, besitzen die wenigstens zwei Kniehebelmechanismen K zwei gesonderte Antriebseinheiten A, die insofern auch gesondert anzusteuem und zu regeln sind, auf was weiter unten noch näher eingegangen wird. Vorzugsweise sind die Kniehebelmechanismen K identisch. Grundsätzlich können auch mehr als zwei Kniehebelmechanismen und auch mehr als nur zwei Antriebseinheiten vorgesehen sein. Denkbar ist z.B. die Anordnung je einer Antriebseinheit bzw. je eines Kniehebels an den vier Ecken eines Formträgers.

Die Kniehebelmechanismen K sind im Ausführungsbeispiel durch sogenannte Y-Kniehebel gebildet, wobei selbstverständlich auch andere Kniehebelmechanismen verwendet werden können, sofern sie gesondert durch gesonderte Antriebseinheiten A antreibbar sind. Die Y-Kniehebel haben den Vorteil, dass sie sehr Platz sparend aufgebaut sind und dennoch hohe Kräfte aufbringen können. So gilt die Regel, dass die Antriebseinheit A eines Kniehebelmechanismus etwa ein Zehntel der Kraft aufbringen muss, die eine Formschließeinheit aufbringen muss, die auf übliche Art den beweglichen Formträger in Formschluss bringt. Die in den ersten beiden Ausführungsbeispielen der Figuren 1 bis 7 dargestellten Lösungen zeigen zudem, dass der Y-Kniehebel Platz sparend auch auf der vom Formspannraum C abgewandten Seite des stationären Formträgers 12 und damit parallel zur Spritzgießeinheit S angeordnet werden kann.

Fig. 3 zeigt den Aufbau des Kniehebelmechanismus K an sich. Der Kniehebelmechanismus K besitzt ein Verbindungselement 13, das über wenigsten zwei an Anlenkungspunkten 14, 15 angeordnete Halteelemente 16, 17 mit den Anlenkungspunkten 29, 30 der Kniehebel 18, 19 des Kniehebelmechanismus angelenkt ist. Über die Halteelemente 16, 17 ist damit das Verbindungselement 13 aufgehängt. Über diese Halteelemente steht das Verbindungselement 13, das zugleich die Antriebseinheit A trägt, einerseits mit einem beweglichen und andererseits mit einem stationären Element der Formschließeinheit F in Verbindung. In den Ausführungsbeispielen der Figuren 1 bis 7 ist der Kniehebelmechanismus über das Halteelement 16 und den als Bolzen ausgebildeten Anlenkungspunkt 29 am stationären Formträger 12 als stationärem Element angelenkt und über einen ebenfalls als Bolzen ausgebildeten Anlenkungspunkt 30 mit den Holmen 25 in Verbindung, die ihrerseits die Verbindung zum beweglichen Formträger 11 herstellen. Damit liegt eine mittelbare Verbindung zwischen dem Halteelement 17 bzw. dem Kniehebelmechanismus K und dem beweglichen Formträger vor. Der Bolzen 30 ist in Führungsschuhen gelagert, die im Ausführungsbeispiel der Figuren 1 bis 5 in Führungen 22 geführt sind, die am stationären Formträger 12 befestigt oder mit diesem einstückig verbunden sind. Die Ausführungsform der Fig. 1 bis 5 hat den Vorteil, dass aufgrund des in der Mitte bestehenden Freiraums ein Zylinderwechsel an der Plastifiziereinheit 50 nach wie vor problemlos dadurch möglich ist, dass die Spritzgießeinheit mit ihrem vorderen, üblicherweise am stationären Formträger anliegenden Ende seitlich herausgeschwenkt werden kann.

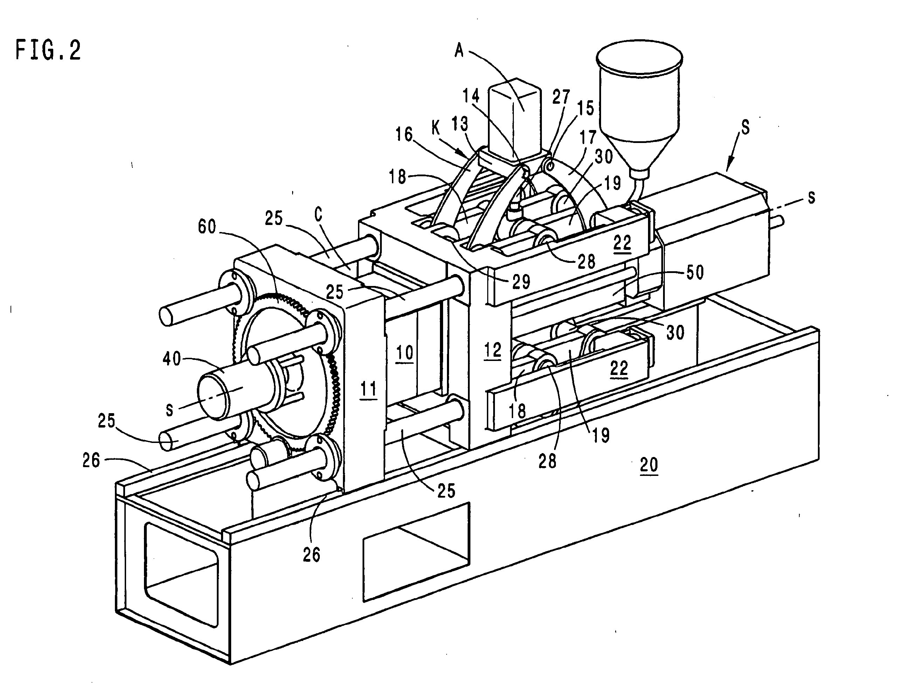

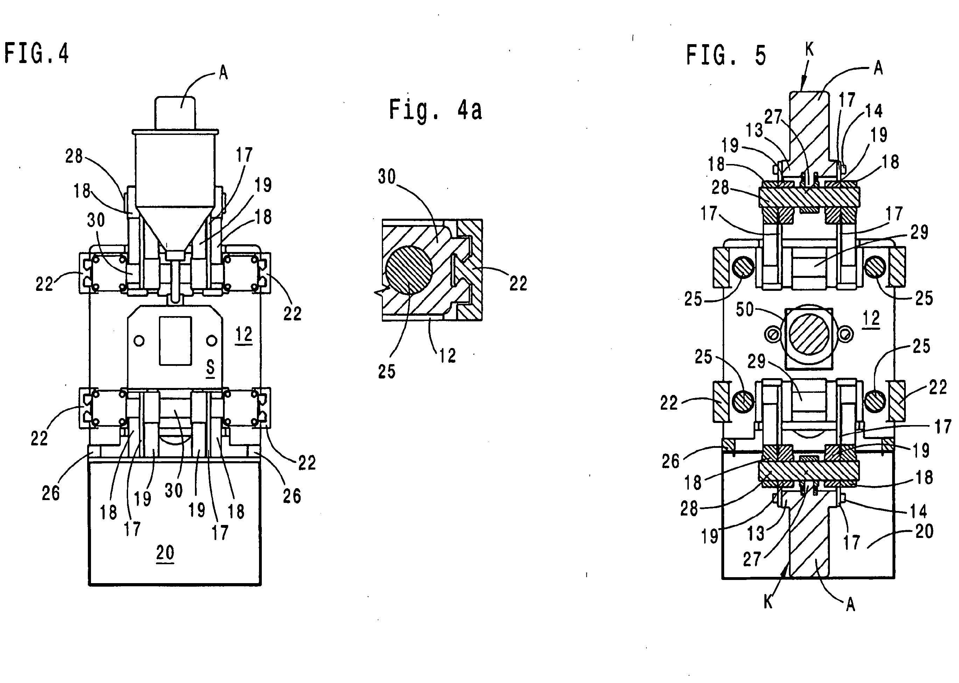

Als Antriebseinheit ist jeder beliebige Antriebsmechanismus möglich, wobei vorzugsweise elektro-mechanische Antriebe eingesetzt werden, ein magnetischer Linearantrieb kann aber z.B. auch verwendet werden. Beim elektro-mechanischen Antrieb wird eine Rotationsbewegung in eine Geradeausbewegung umgesetzt, bei der ein Antriebselement 27 aus der Antriebseinheit A in der Stellung gemäß Fig. 3 heraus in die Stellung gemäß Fig. 2 überführt wird. Da das Antriebselement am Anlenkungspunkt 28 mit den Kniehebeln 18,19 in Verbindung steht, führt diese Bewegung zur Strecklage des Kniehebels, wobei aufgrund der stationären Anordnung des Anlenkungspunkt 29 der andere Anlenkungspunkt 30 in den Führungen 22 gemäß Fig. 4a gleitet und zwar in der Ansicht gemäß Fig. 3 nach rechts. Dabei werden die Holme 25 gemeinsam mit dem beweglichen Formträger 11 in Fig. 3 nach rechts gezogen, bis sich der Formschluss ergibt. Um die für den Kniehebelmechanismus bedeutsame Strecklage einzustellen, kann der in Fig. 2 ersichtliche, an sich bekannte Formhöhenverstellmechanismus 60 verwendet werden, der dort mittig um eine Auswerfer-einheit 40 geführt ist.

Als Linearantrieb für das Antriebselement 27 kann z.B. eine Kugelrollspindel, eine Gewindespindel oder auch eine Doppelzahnstange verwendet werden, wobei eine Gewindespindel z.B. in einem Hohlwellenmotor angeordnet sein kann, der zugleich die Antriebseinheit A ist. Als Antrieb kommt z.B. auch ein magnetisch wirkender Linearmotor in Betracht. Die Kniehebelmechanismen Y sind vertikal beweglich, was z.B. auch ein Vergleich zwischen den Figuren 1 und 2 deutlich macht.

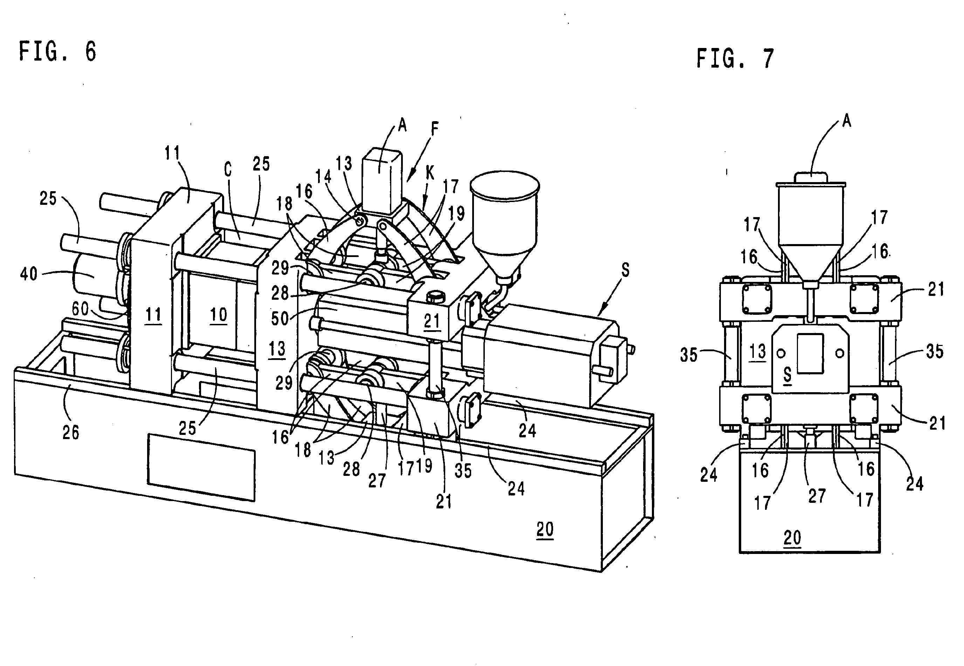

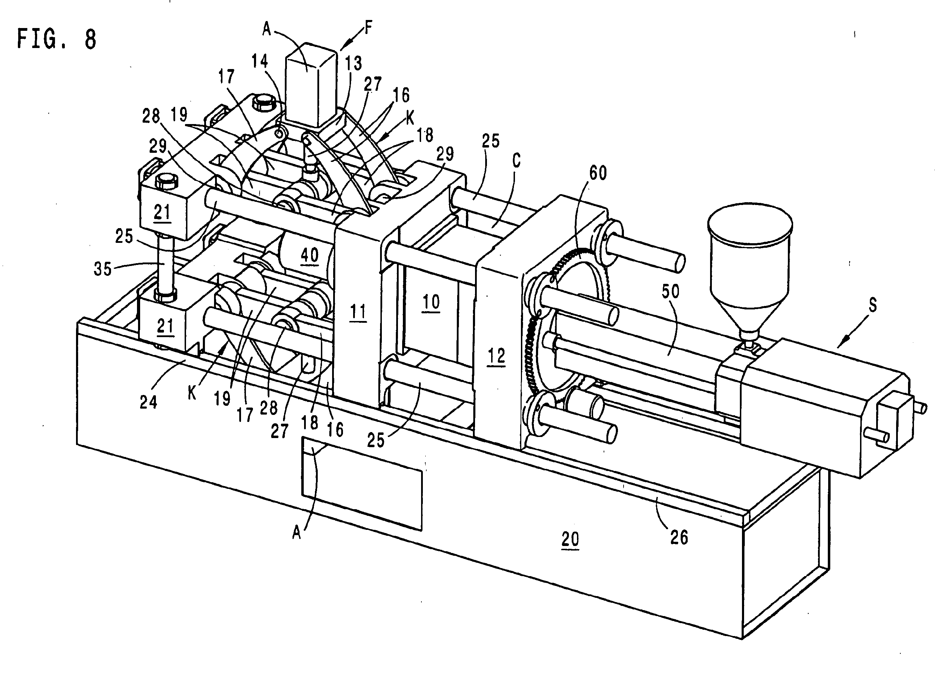

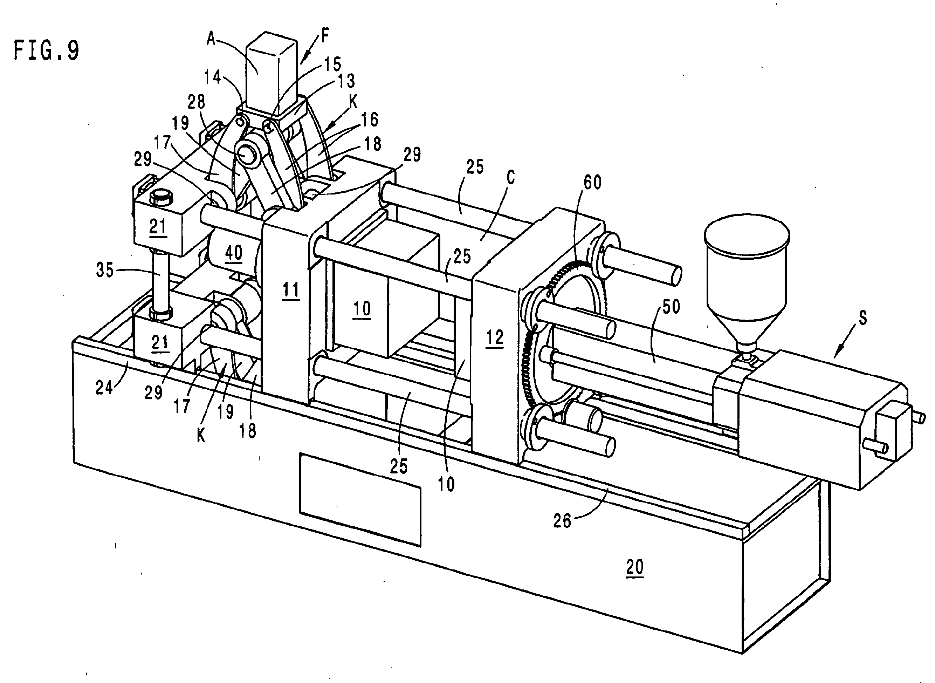

In den ersten beiden Ausführungsbeispielen der Figuren 1 bis 7 ist das stationäre Element der stationäre Formträger 12 und das bewegliche Element mittelbar mit dem beweglichen Formträger in Verbindung. Im dritten Ausführungsbeispiel der Figuren 8 und 9 handelt es sich bei ansonsten im Hinblick auf das zweite Ausführungsbeispiel der Figuren 6 und 7 identischem Aufbau der Kniehebelmechanismen K jedoch um eine Anordnung, bei der das bewegliche Element der bewegliche Formträger 11 ist, während der Kniehebelmechanismus lediglich mittelbar mit dem stationären Formträger als stationärem Element in Verbindung steht. Es handelt sich damit um einen ,drückenden' Typ der Formschließeinheit F im Gegensatz zu dem ,ziehenden' Typ in den ersten beiden Ausführungsbeispielen. Dort wird also ein Dreiplattensystem aufgebaut, bei dem neben dem stationären Formträger und dem beweglichen Formträger als erste zwei Platten eine dritte Platte durch das noch zu erläuternde bügelartige Element 21 gebildet ist, das über Führungen 24 auf dem Maschinenfuß 20 geführt ist.

Die Antriebseinheiten A wirken quer zur Schließachse s-s, im Ausführungsbeispiel im rechten Winkel zur Schließachse, wobei sie vorzugsweise symmetrisch zur Schließachse s-s angeordnet sein können. Die Holme 25, die zugleich als Führungsholme ausgebildet sind, durchgreifen den stationären Formträger 12. Durch die Anordnung quer zur Schließachse erstrecken sich die Antriebseinheiten A in einer horizontalen Projektion über die Abmessungen der Formträger hinaus, wie sich z.B. aus den Stirn- und Schnittansichten der Figuren 4, 5 und 7 ergibt. Grundsätzlich können sie sich auch seitlich über die Abmessungen der Formträger hinaus erstrecken, wenngleich die in den Figuren gewählte Ausführungsform mit einer Anordnung nach oben und unten, was die Grundfläche anbelangt, Platz sparender ist.

Während in den Figuren 1 bis 5 des ersten Ausführungsbeispieles die Führungen 22 mit dem stationären Formträger fest verbunden sind, wird im zweiten Ausführungsbeispiel der Figuren 6 und 7 eine andere Art der Führung gewählt. Dort ist ein bügelartiges Element 21 vorgesehen, das am oberen und unteren Kniehebel angreift und den Anlenkungspunkt 30 lagert. Die beiden bügelartigen Elemente sind durch Aussteifungselemente 35 miteinander verbunden. Damit ergibt sich ein geschlossener Rahmen, der über Führungen 24 auf dem Maschinenfuß 20 geführt ist, wie der bewegliche Formträger 11 auf den Führungen 26. Dieser Bügel kann auch konstruktiv anders aufgebaut sein und kann z.B., um die Führung zu verbessern, einen sich gegebenenfalls über einen längeren Bereich des Maschinenfuß 20 erstreckenden Fußbereich an den Führungen 24 geführt sein. Die in den Figuren 6 und 7 dargestellte Ausführungsform trägt jedoch zu einem Platz sparenderen modularen Aufbau mit kleineren Bauteilen bei, die auch problemlos nach Übersee verschickt werden können.

Im Ausführungsbeispiel der Figuren 8 und 9 befindet sich die Formhöhenverstellung 60 auf der vom Formspannraum C abgewandten Seite des stationären Formträgers 12. Die Kniehebelmechanismen K sind auf der vom Formspannraum C abgewandten Seite des beweglichen Formträgers 11 angeordnet, wobei sich die bügelartigen Elemente 21 zwar auch bei Schließbewegung auf den Führungen 24 bewegen, allerdings handelt es sich bei dieser Bewegung lediglich um die durch Dehnverformung der Holme hervorgerufene Bewegung. Die ,eigentliche' Bewegung führt hier der bewegliche Formträger 11 aus, der dazu auf Führungen auf dem Maschinenfuß gelagert ist.

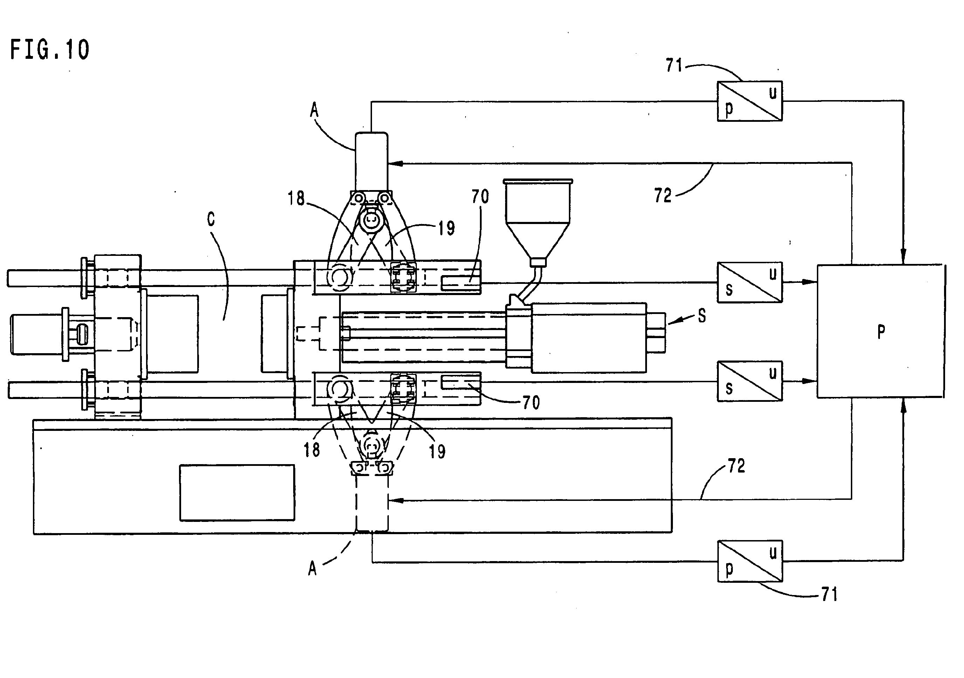

Die Spritzgießmaschine kann zur Erzielung einer höheren Plattenparallelität, d.h. einer Parallelität zwischen beweglichem und stationären Formträger aufgrund der zwei Antriebseinheiten A folgendermaßen betrieben werden: Während wenigstens eines Spritzzyklusses wird der bewegliche Formträger 11 auf den stationären Formträger 12 bis zum Formschluss zu bewegt und anschließend wird die Spritzgießform 10 durch eine entgegengesetzte Bewegung des Formträgers wieder geöffnet. Während dieses Spritzzyklus wird die Parallelität von beweglichem Formträger 11 zu stationärem Formträger gemäß Fig. 10 z.B. über Wegmessgeber 70 erfasst. Referenzpunkt für die Parallelität ist dabei vorzugsweise eine Schließstellung der Spritzgieß-form bei gleicher Kraftaufbringung durch beide Antriebseinheiten A. Erfasst wird auch die Parallelität der am Formträger befestigten Teile einer Spritzgießform 10. Gleichzeitig wird wenigstens ein die Leistung oder Kraft der Antriebseinheit A bestimmender Parameter wie z.B. der Stromverbrauch oder die Drehzahl einer Gewindespindel erfasst. Dies erfolgt in Fig. 10 über Kraftmesser 71, die an der Antriebseinheit angreifen, jedoch auch an anderer Stelle die Kraft oder den Druck erfassen können. Beispielsweise können auch an wenigstens einem der Anlenkungspunkte 28, 29, 30 Kraftmessbolzen vorgesehen werden. Ein Prozessor P bestimmt daraus wiederum Regelparameter, mit denen die Antriebseinheiten über die Leitung 72 zur Erreichung der Parallelität beeinflusst werden. Aufgrund der so gewonnenen Werte lassen sich dann die Antriebseinheiten A unabhängig voneinander durch Beeinflussung des erfassten Parameters so regeln, dass eine Parallelität erreicht wird.

Das Erfassen der Parallelität erfolgt durch Erfassen der Wegposition des beweglichen Formträgers 11 oder eines anderen von den Antriebseinheiten A bewegten Teils, wie in Fig. 10 dargestellt. Dabei werden die von den Antriebseinheiten jeweils beeinflussten Wegpositionen getrennt erfasst, d.h. es findet eine Zuordnung zu den Antriebseinheiten A statt. So können z.B. bei oben und unten angeordneten Kniehebelmechanismen K die Wegpositionen oben und unten den beiden Kniehebelmechanismen jeweils zugeordnet erfasst werden.

Dieses Verfahren wird kurz vor und beim Formschluss durchgeführt und kann bei Inbetriebnahme der Spritzgießmaschine durchgeführt werden es kann jedoch auch über den gesamten Spritzzyklus eine entsprechende Erfassung erfolgen, sodass die Formschlussbewegung insgesamt weitestgehend parallel erfolgen kann, was einen geringeren Verschleiß ebenso zur Folge hat wie eine höhere Qualität der hergestellten Spritzteile. Das Verfahren kann nur beim Aufstellen der Spritzgießmaschinen, also einmal vor Inbetriebnahme durchgeführt werden, vorzugsweise sollte es aber zumindest in regelmäßigen Abständen für eine gegebenenfalls erforderliche erneute Kalibrierung z.B. nach einem Wechsel der Spritzgießform C durchgeführt werden. Bedarfsweise ist auch eine kontinuierliche Erfassung und Regelung möglich.

### Bezugszeichenliste

| | |
|---|---|
| 10 | Spritzgießform |
| 11 | beweglicher Formträger |
| 12 | stationärer Formträger |
| 13 | Verbindungselement |
| 14,15 | Anlenkungspunkt |
| 16,17 | Halteelement |
| 18,19 | Kniehebel |
| 20 | Maschinenfuß |
| 21 | bügelartiges Element |
| 22 | Führungen |
| 24 | Führungen für 21 |
| 25 | Holm |
| 26 | Führungen für beweglichen Formträger |
| 27 | Antriebselement |
| 28 | Anlenkungspunkt für 27 |
| 29,30 | Anlenkungspunkt |
| 35 | Aussteifung |
| 40 | Auswerfereinheit |
| 50 | Plastifiziereinheit |
| 60 | Formhöhenverstellung |
| 70 | Wegmessgeber |
| 71 | Kraftmesser |
| 72 | Leitung |
| A | Antriebseinheit |
| C | Formspannraum |
| F | Formschließeinheit |
| S | Spritzgießeinheit |
| K | Kniehebelmechanismus |
| P | Prozessor |

## Patentansprüche

1. Verfahren zum Betreiben einer Spritzgießmaschine, wobei die Formschließeinheit (F) wenigstens zwei Kniehebelmechanismen (K) mit zwei gesonderten Antriebseinheiten (A) aufweist, mit dem Schritt
- Durchführen wenigstens eines Spritzzyklusses unter Bewegung des beweglichen Formträgers (11) auf den stationären Formträger (12) zu bis zum Formschluss und wieder vom stationären Formträger weg,
- Erfassen der Parallelität zwischen beweglichem Formträger (11) und stationärem Formträger (12) oder der daran befestigten Teile einer Spritzgießform (10) über Wegmessgeber (70) während des Spritzzyklus,
- Erfassen wenigstens eines Parameters während des Spritzzyklus,
- Regeln der Antriebseinheiten (A) unabhängig voneinander durch Beeinflussung des Parameters, so dass Parallelität erreicht wird,
**dadurch gekennzeichnet, dass** kurz vor und beim Formschluss die Leistung oder Kraft der Antriebseinheiten (A) als Parameter erfasst und zur Erzielung der Parallelität geregelt wird.

2. Verfahren nach Anspruch 1, **dadurch gekennzeichnet, dass** das Erfassen der Parallelität durch Erfassen der Wegposition des beweglichen Formträgers (11) erfolgt, wobei die von den Antriebseinheiten jeweils beeinflussten Wegpositionen getrennt erfasst werden.

3. Verfahren nach einem der Ansprüche 1 oder 2, **dadurch gekennzeichnet, dass** das Verfahren bei Inbetriebnahme der Spritzgießmaschine und/oder nach einem Wechsel der Spritzgießform durchgeführt wird.

4. Verfahren nach einem der vorhergehenden Ansprüche, **dadurch gekennzeichnet, dass** das Verfahren kontinuierlich oder in regelmäßigen Abständen durchgeführt wird.

5. Spritzgießmaschine zur Verarbeitung von Kunststoffen und anderer plastifizierbarer Massen wie pulverförmige, metallische oder keramische Massen mit einer Formschließeinheit (F) und einer Spritzgießeinheit (S) sowie mit
- wenigstens einer zwischen stationärem Formträger (12) und beweglichem Formträger (11) aufgenommenen Spritzgießform (10),
- wenigstens zwei Kniehebelmechanismen (K) mit gesonderten Antriebseinheiten (A) zur Schließbewegung der Formträger aufeinander zu bis zum Formschluss und voneinander weg zum Öffnen der Spritzgießform während wenigstens eines Spritzzyklusses,
- Wegmessgebern (70) zum Erfassen der Parallelität zwischen beweglichem Formträger (11) und stationärem Formträger (12) oder der daran befestigten Teile der Spritzgießform (10) während des Spritzzyklus,
- Erfassungsmitteln zum Erfassen wenigstens eines Parameters während dieses Spritzzyklus,
- wenigstens einem Regler zum Regeln der Antriebseinheiten (A) unabhängig voneinander durch Beeinflussung des Parameters, so dass Parallelität erreicht wird. -
**dadurch gekennzeichnet, dass** Kraftmesser (71) als Erfassungsmittel vorgesehen sind, die kurz vor und beim Formschluss Leistung oder Kraft der Antriebs-einheiten (A) als Parameter erfassen können, und dass der Regler den so erfassten Parameter zur Erzielung der Parallelität regeln kann.

6. Spritzgießmaschine nach Anspruch 5, **dadurch gekennzeichnet, dass** die symmetrisch zu einer Schließachse (s-s) der Formschließeinheit (F) angeordneten Kniehebelmechanismen (K) identisch sind.

7. Spritzgießmaschine nach Anspruch 5 oder 6, **dadurch gekennzeichnet, dass** der Kniehebelmechanismus (K) ein Verbindungselement (13) aufweist, dass über wenigstens zwei an Anlenkungspunkten (14, 15) an einem beweglichen und einem stationären Element der Formschließeinheit (F) angelenkte Haltelemente (16, 17) gelenkig aufgehängt ist, an denen die Antriebseinheit (A) befestigt ist.

8. Spritzgießmaschine nach Anspruch 7, **dadurch gekennzeichnet, dass** die Formträger durch einen beweglichen Formträger (11) und einen stationären Formträger (12) gebildet sind, wobei das stationäre Element der stationäre Formträger (12) ist und das bewegliche Element zumindest mittelbar mit dem beweglichen Formträger (11) in Verbindung steht.

9. Spritzgießmaschine nach Anspruch 7, **dadurch gekennzeichnet, dass** die Formträger durch einen beweglichen Formträger (11) und einen stationären Formträger (12) gebildet sind, wobei das bewegliche Element der bewegliche Formträger (11) ist und das stationäre Element zumindest mittelbar mit dem stationären Formträger (12) in Verbindung steht.

10. Spritzgießmaschine nach einem der Ansprüche 7 bis 9, **dadurch gekennzeichnet, dass** das bewegliche Element an einem stationären Teil der Spritzgießmaschine geführt ist.

11. Spritzgießmaschine nach Anspruch 10, **dadurch gekennzeichnet, dass** das bewegliche Element ein an einem Maschinenfuß (20) der Spritzgießmaschine geführtes bügelartiges Element (21) ist.

12. Spritzgießmaschine nach Anspruch 10 oder 11, **dadurch gekennzeichnet, dass** das bewegliche Element an Führungen (22) geführt ist, die am stationären Formträger (12) befestigt oder mit diesem einstückig sind.

13. Spritzgießmaschine nach einem der Ansprüche 7 bis 12, **dadurch gekennzeichnet, dass** das bewegliche Element über Holme (25) mit dem beweglichen Formträger (11) in Verbindung steht.

14. Spritzgießmaschinen nach einem der Ansprüche 5 bis 13, **dadurch gekennzeichnet, dass** die Spritzgießform (10) in einem zwischen den Formträgem gebildeten Formspannraum (C) aufgenommen ist und dass Spritzgießeinheit (S) und Kniehebelmechanismen (K) auf derselben, vom Formspannraum (C) abgewandten Seite des Formträgers, vorzugsweise des stationären Formträgers (12) angeordnet sind.

## Claims

1. Method for operating an injection molding machine, wherein the mold closing unit (F) comprises at least two toggle lever mechanisms (K) with two separate drive units (A), comprising the steps
- effecting at least one injection cycle in moving the movable mold carrier (11) towards the stationary mold carrier (12) until mold closure and from the stationary mold carrier away again,
- detecting the parallelism between movable mold carrier (11) and stationary mold carrier (12) or of parts of an injection mold (10) mounted thereon by means of position encoders (70) during the injection cycle,
- detecting at least one parameter during the injection cycle,
- controlling the drive units (A) independently from each other in influencing the parameter, so that parallelism is achieved,
**characterized in that** a short time before and during mold closure the power or force of the drive units (A) is detected as parameter and is controlled for obtaining the parallelism.

2. Method according to claim 1, **characterized in that** the detecting of the parallelism is effected in detecting the travel position of the movable mold carrier (11), wherein the travel positions influenced by each drive unit are detected separately.

3. Method according to claim 1 or 2, **characterized in that** the method is conducted when putting the injection molding machine into operation and/or after a change of the injection mold.

4. Method according to one of the preceding claims, **characterized in that** the method is conducted continuously or at regular intervals.

5. Injection molding machine for processing plastic materials and other plastifiable masses as pulverulent, metallic or ceramical masses, comprising a mold closing unit (F) and an injection molding unit (S) and further comprising
- at least one injection mold (10) received between a stationary mold carrier (12) and a movable mold carrier (11),
- at least two toggle lever mechanisms (K) comprising separate drive units (A) for moving the movable mold carriers towards each other until mold closure and away from each other for opening the injection mold during at least one injection cycle,
- position encoders (70) for detecting the parallelism between the movable mold carrier (11) and the stationary mold carrier (12) or parts of the injection mold (10) mounted thereon during the injection cycle,
- detection means for detecting at least one parameter during this injection cycle,
- at least one controller for controlling the drive units (A) independently from each other in influencing the parameter, so that parallelism is achieved,
**characterized in that** the detection means are force meters (71), which are able to detect power or force of the drive units (A) as a parameter a short time before or during the mold closure, and that the controller is able to control the thus detected parameter for obtaining the parallelism.

6. Injection molding machine according to claim 5, **characterized in that**, the toggle lever mechanisms (K) arranged symmetrically to a closing axis (s-s) of the mold closing unit (F) are identical.

7. Injection molding machine according to claim 5 or 6, **characterized in that** the toggle lever mechanism (K) comprises a connecting element (13) which is jointly suspended via at least two holding elements (16, 17) on which the drive unit (A) is mounted, which holding elements are hinged at articulation points (14, 15) at a movable element and a stationary element of the mold closing unit (F).

8. Injection molding machine according to claim 7, **characterized in that** the mold carriers are constituted by a movable mold carrier (11) and a stationary mold carrier (12), wherein the stationary element is the stationary mold carrier (12) and the movable element is at least indirectly connected to the movable mold carrier (11).

9. Injection molding machine according to claim 7, **characterized in that** the mold carriers are constituted by a movable mold carrier (11) and a stationary mold carrier (12), wherein the movable element is the movable mold carrier (11) and the stationary element is at least indirectly connected to the stationary mold carrier (12).

10. Injection molding machine according to one of the claims 7 to 9, **characterized in that** the movable element is guided at a stationary part of the injection molding machine.

11. Injection molding machine according to claim 10, **characterized in that** the movable element is a bow-shaped element (21) that is guided at a machine pedestal (20) of the injection molding machine.

12. Injection molding machine according to claim 10 or 11, **characterized in that** the movable element is guided on guides (22), which are mounted on the stationary mold carrier (12) or are unitary therewith.

13. Injection molding machine according to one of the claims 7 to 12, **characterized in that** the movable element is connected to the movable mold carrier (11) via columns or bars (25).

14. Injection molding machine according one of the claims 5 to 13, **characterized in that** the injection mold (10) is received in a mold clamping space(C) constituted between the mold carriers and that the injection unit (S) and the toggle lever mechanisms (K) are arranged on the same side of the mold carrier, preferably of the stationary mold carrier (12), which side is facing away from the mold clamping space ©.

## Revendications

1. Procédé de commande d'une machine pour moulage par injection, dans laquelle l'unité de fermeture de moule (F) comporte au moins deux mécanismes de genouillère (K) ayant deux unités de commande séparées (A), comprenant l'étape consistant à :
- effectuer au moins un cycle d'injection en déplaçant le support de moule déplaçable (11) sur le support de moule stationnaire (12), jusqu'à la fermeture du moule puis en repartant à nouveau du support de moule stationnaire,
- mesurer le parallélisme entre le support de moule déplaçable (11) et le support de moule stationnaire (12) ou les pièces d'un moule pour moulage par injection (10) fixées à ce dernier au moyen d'un détecteur d'éloignement (70) durant le cycle d'injection,
- mesurer au moins un paramètre durant le cycle d'injection,
- régler les unités de commande (A) indépendamment l'une de l'autre en influant sur les paramètres, de sorte à obtenir un parallélisme,
**caractérisé en ce que**, juste avant et pendant la fermeture des moules, la puissance ou la force des unités de commande (A) est mesurée comme paramètre et réglée pour atteindre le parallélisme.

2. Procédé selon la revendication 1, **caractérisé en ce que** la mesure du parallélisme s'effectue par la mesure de position d'éloignement du support de moule déplaçable (11), les positions d'éloignement influencées respectivement par les unités de commande étant mesurées séparément.

3. Procédé selon la revendication 1 ou 2, **caractérisé en ce que** le procédé est réalisé lors de la mise en route de la machine pour moulage par injection et/ou après un changement du moule de moulage par injection.

4. Procédé selon l'une des revendications précédentes, **caractérisé en ce que** le procédé est mis en oeuvre de manière continue ou à intervalles réguliers.

5. Machine de moulage par injection pour l'élaboration de matières plastiques et d'autres masses plastifiables comme des masses pulvérulentes, métalliques ou céramiques, comportant une unité de fermeture de moule (F) et une unité de moulage par injection (S) ainsi que
- au moins un moule pour moulage par injection (10) placé entre un support de moule stationnaire (12) et un support de moule déplaçable (11),
- au moins deux mécanismes de genouillère (K) ayant des unités de commande séparées pour le déplacement de fermeture des supports de moule l'un vers l'autre jusqu'à la fermeture du moule et l'éloignement l'un de l'autre pour l'ouverture du moule pour moulage par injection pendant au moins un cycle d'injection,
- des détecteurs d'éloignement (70) pour mesurer le parallélisme entre le support de moule déplaçable (11) et le support de moule stationnaire (12) ou les pièces du moule pour moulage par injection (10) fixées à ce dernier, durant le cycle d'injection,
- des moyens de mesure pour mesurer au moins un paramètre durant ce cycle d'injection,
- au moins un dispositif de réglage pour régler les unités de commande (A) indépendamment l'une de l'autre en influant sur les paramètres, de sorte à obtenir un parallélisme,
**caractérisée en ce que** des dispositifs de mesure de force (71) sont prévus en tant que moyen de mesure et peuvent mesurer avant et pendant la fermeture du moule la puissance ou la force des unités de commande (A) en tant que paramètres, et **en ce que** le dispositif de réglage peut régler les paramètres ainsi mesurés pour obtenir le parallélisme.

6. Machine pour moulage par injection selon la revendication 5, **caractérisée en ce que** les mécanismes de genouillère (K) disposés symétriquement par rapport à un axe de fermeture (s-s) de l'unité de fermeture de moule (F) sont identiques.

7. Machine pour moulage par injection selon la revendication 5 ou 6, **caractérisée en ce que** le mécanisme de genouillère (K) présente un élément de liaison (13), qui est suspendu de manière articulée au moyen d'au moins deux éléments de maintien (16,17) articulés à des points d'articulation (14,15) sur un élément déplaçable et un élément stationnaire de l'unité de fermeture de moule (F), l'unité d'entraînement (A) étant fixée à ces éléments de maintien.

8. Machine pour moulage par injection selon la revendication 7, **caractérisée en ce que** les supports de moule sont formés d'un support de moule déplaçable (11) et d'un support de moule stationnaire (12), l'élément stationnaire étant le support de moule stationnaire (12) et l'élément déplaçable étant relié au moins indirectement au support de moule déplaçable (11).

9. Machine pour moulage par injection selon la revendication 7, **caractérisée en ce que** les supports de moule sont formés d'un support de moule déplaçable (11) et d'un support de moule stationnaire (12), l'élément déplaçable étant le support de moule déplaçable (11) et l'élément stationnaire étant relié au moins indirectement au support de moule stationnaire (12).

10. Machine pour moulage par injection selon l'une des revendications 7 à 9, **caractérisée en ce que** l'élément déplaçable est guidé sur un partie stationnaire de la machine pour moulage par injection.

11. Machine pour moulage par injection selon la revendication 10, **caractérisée en ce que** l'élément déplaçable est un élément en forme d'étrier (21) guidé sur une base de machine (20) de la machine pour moulage par injection.

12. Machine pour moulage par injection selon la revendication 10 ou 11, **caractérisée en ce que** l'élément déplaçable est guidé sur des rails (22), lesquels sont fixés au support de moule stationnaire (12) ou sont d'un seul tenant avec ce dernier.

13. Machine pour moulage par injection selon l'une des revendications 7 à 12, **caractérisée en ce que** l'élément déplaçable est relié à l'aide de barres (25) au support de moule déplaçable (11).

14. Machine pour moulage par injection selon l'une des revendications 5 à 13, **caractérisée en ce que** le moule pour moulage par injection (10) est placé dans un espace de battement de moule (C) formé entre les supports de moule et **en ce que** l'unité de moulage par injection (S) et les mécanismes de genouillère (K) sont disposés sur le même côté du support de moule opposé à l'espace de battement de moule (C), de préférence du support de moule stationnaire (12).
